# EUROPEAN PATENT APPLICATION

(11) **EP 4 398 025 A1**
(43) Date of publication of application: **10.07.2024**
(21) Application number: 23305011.1
(22) Date of filing: 04.01.2023
(51) Int. Cl.: G02F 1/1333, G02F 1/1341, G02F 1/1339

(54) **METHOD FOR MANUFACTURING AN ELECTRICALLY CONTROLLABLE FLEXIBLE LIGHT-ADJUSTING DEVICE PRESENTING AT LEAST A TUNABLE OPTICAL PROPERTY USING LIQUID CRYSTALS, ASSOCIATED FLEXIBLE LIGHT-ADJUSTING DEVICE AND GLAZING UNIT**

(71) Applicant: Saint-Gobain Glass France, 92400 Courbevoie (FR); Brilliant Optronics Co., Ltd, Kaohsiung City 81349 (TW)
(72) Inventor: LI, Cheng-Chang, Kaohsiung 81349 Chinese Taipei (CN); CHANG, Li-Min, Kaohsiung 81349 Chinese Taipei (CN); LIN, Kuan-Wu, Kaohsiung 81349 Chinese Taipei (CN); GUO, Duan-Yi, Kaohsiung 81349 Chinese Taipei (CN); LIN, Tsung-Hsien, Kaohsiung 81349 Chinese Taipei (CN); OZANAM, Cécile, 93300 Aubervilliers (FR)
(74) Representative: Saint-Gobain Recherche

(57) **Abstract**

The invention concerns a method for manufacturing an electrically controllable flexible light-adjusting device (14) presenting at least a tunable optical property, comprising the following steps:
- providing a transparent and flexible first stack of layers (20),
- applying a sealing material (47) to an internal surface (20A) of the first stack for defining a portion of a reception area on said internal surface,
- providing a transparent and flexible second stack of layers (30),
- adhering spacer particles (48) to an internal surface (30A) of the second stack,
- introducing the spacer particles adhering to said internal surface in an electroactive material (46), comprising a plurality of liquid crystals (50), filling at least a zone of the reception area,
- pressing with two rollers (56, 58) against each other the first stack having the electroactive material and the second stack having the spacer particles to bond them to each other.

## Description

The invention concerns a method for manufacturing an electrically controllable flexible light-adjusting device able to present at least one tunable optical property using liquid crystals.

The invention also concerns a flexible light-adjusting device electrically controllable able to present at least one tunable optical property, obtained by the method for manufacturing.

The invention also concerns a glazing unit including the flexible light-adjusting device.

The invention also concerns a wall for a building including the glazing unit as described above.

The flexible light-adjusting device according to the invention described in the following is applicable:
- to the building industry notably to monolithic glazing or laminated glazing (plane or curved), double or triple glazing. Said glazing can be glazing for exterior walls, windows, door, interior partitions (including in humidity area such as, shower partition, etc.) or furniture, or other (interior) glazed surfaces. More particularly, the flexible light-adjusting device can be part of:
   ∘ an architectural glazing, i.e. glazing in buildings and on the envelope of buildings,
   ∘ an interior glazing such as a room interior glazing, partition glazing, interior windows and doors for offices, hotel rooms, shops, restaurants, homes, private rooms, medical spaces, bathrooms, for example shower compartment glazing,
   ∘ equipment manufacturing (e.g. glazing for refrigerators, microwaves, furniture, lighting, ...).
- to projecting screen,
- to vehicles such as motor vehicles, buses, railway vehicles or aircraft, to any part of glazing notably curved glazing, laminated or not, such as roof, windshield, lateral glazing, sidelites, etc.

As understood here a light-adjusting device electrically controllable presenting a tunable optical property using liquid crystals refers to a device presenting a tunable optical property in function of the application of a predetermined voltage to liquid crystals included in said device. In particular, such light-adjusting device comprises an electroactive layer made of an electroactive material comprising liquid crystals extending in sandwich between two stacks of layers. Each stack of layers comprises an electrode. The electroactive layer arranged in sandwich between the two electrodes is configured to present at least a first optical state and a second optical state distinct from the first optical state. The electroactive layer is able to switch between the first optical state and the second optical state in function of a predetermined voltage applied to the electroactive layer via the two electrodes. The light-adjusting device is configured to present a first optical configuration when the electroactive layer is in the first optical state and the light-adjusting device is configured to present a second optical configuration when the electroactive layer is in the second optical state.

Some known light-adjusting devices are able to present a tunable optical property which is transmission haze due to the reorganization of the liquid crystals inside the electroactive layer when a predetermined voltage is applied to the electroactive layer.

Such known light-adjusting devices comprise rigid (opposed to flexible) stack of layers separated by the spacer particles included inside the electroactive material comprising the liquid crystals.

Moreover, in known manufacturing methods of those known light-adjusting devices, filling the space between the superposed rigid stack of layers is carried out under vacuum so as to limit the apparition of bubbles inside the electroactive layer comprising the liquid crystals.

Bubbles appearing in the electroactive layer, notably at the periphery of the spacer particles, locally create inhomogeneity in the electroactive layer, disturbing light transmission.

This can thus lead to the apparition of opaque spots in the liquid crystal layer whereas the rest of the electroactive layer is in a transparent configuration and *vice versa.*

However, filling under vacuum is costly and time consuming.

Moreover, using rigid stacks of layers limits the possibilities of use of the known light-adjusting device.

One aim of the invention is to provide a method for manufacturing a flexible light-adjusting device able to be carried out under atmospheric pressure while limiting the apparition of bubbles in the electroactive layer.

For this purpose, the invention relates to a method for manufacturing an electrically controllable flexible light-adjusting device able to present at least a tunable optical property using liquid crystals, the method for manufacturing being preferably carried out under atmospheric pressure, the method for manufacturing comprising the following steps:
- providing a first stack of layers being transparent and flexible, the provided first stack of layers having an internal surface and an external surface, the first stack of layers comprising from its external surface to its internal surface, a first base layer and a first electrically conductive layer, the first electrically conductive layer being a continuous layer, an area of the first electrically conductive layer of the provided first stack of layers being greater than or equal to 1 cm², preferably greater than or equal to 25 cm² and advantageously greater than or equal to 100 cm², at least a portion of the first electrically conductive layer being intended to form a first electrode of the flexible light-adjusting device,
- applying a sealing material to the internal surface of the provided first stack of layers for defining at least a contour of sealing material, the contour of sealing material delimiting on the internal surface of the first stack of layers at least a portion of a reception area of an electroactive material,
- providing a second stack of layers being transparent and flexible, the provided second stack of layers having an internal surface and an external surface, the second stack of layers comprising from its external surface to its internal surface, a second base layer and a second conductive layer, the second conductive layer being a continuous layer, an area of the second electrically conductive layer of the provided second stack of layers being greater than or equal to 1 cm², preferably greater than or equal to 25 cm² and advantageously greater than or equal to 100 cm², at least a portion of the second electrically conductive layer being intended to form a second electrode of the flexible light-adjusting device,
- adhering a plurality of spacer particles to the internal surface of the provided second stack of layers,
- introducing the spacer particles adhering to the internal surface of the second stack of layers in an electroactive material filling at least a zone of the reception area, the electroactive material comprising at least a plurality of liquid crystals and, optionally, dyes,
- pressing against each other the first stack of layers provided with the electroactive material filling at least a zone of the reception area and the second stack of layers provided with the spacer particles to bond them to each other to obtain a compressed component, the internal surfaces of the first and second stacks of layers facing each other during the step of pressing, the step of pressing being carried out by two rollers having opposite winding directions though which the first and second stacks of layers are conveyed,
   the step of introducing and the step of pressing being carried out at the same time or
   the step of introducing being carried out before the step of pressing.

The method for manufacturing the flexible light-adjusting device according to the invention can be carried out under atmospheric pressure.

Thanks to the fact that method for manufacturing comprises a step of introduction of the spacer particles inside the electroactive material filling at least in part the reception area of the first stack of layers, the apparition of bubbles in the electroactive layer is reduced.

The compressed component is for example the flexible light-adjusting component.

As a variant, the compressed component corresponds to an intermediate product. In this case, the method for manufacturing comprises finishing steps so as to finish the flexible electroactive material.

Finishing steps comprise, for example, a step of curing and/or a step of cutting the obtained flexible-light component to obtain the flexible light-adjusting component.

According to some embodiments of the method for manufacturing:
- the method for manufacturing comprises a step of injecting the electroactive material inside said zone of the reception area of the first stack of layers, the step of injecting being carried out under atmospheric pressure.
- the first and second stacks of layers are conveyed substantially horizontally between the two rollers during the step of pressing.
- the electroactive material is injected towards a zone of the reception area.
- the first and second stacks of layers are conveyed substantially vertically between the two rollers during the step of pressing.
- the electroactive material is injected vertically in an interstice defined between at least a zone of the reception area of the first stack of layers and a zone of the second stack of layers facing each other.
- a width of each of the first electrically conductive layer and the second electrically conductive layer is greater than or equal to 1 centimeter, preferably greater than or equal to 5 centimeters and advantageously greater than or equal to 10 centimeters, and/or a length of each of the first electrically conductive layer and the second electrically conductive layer is greater than or equal to 1 centimeter, preferably greater than or equal to 5 centimeters and advantageously greater than or equal to 10 centimeters.
- the first stack of layers comprises a first alignment layer and the second stack of layers comprises a second alignment layer, the first electrically conductive layer extending in sandwich between the first base layer and the first alignment layer and the second electrically conductive layer extending in sandwich between the second base layer and the second alignment layer.
- the electroactive material does not comprise polymer or a rate of polymer lower than 15 % in weight.
- the electroactive material in which the spacer particles are introduced comprises a viscosity greater than or equal to 0.01 Pa.s (Pascal-second), and preferably greater than or equal to 0.01 Pa.s and less than or equal to 2 Pa.s.
- the two rollers are heated during the step of pressing.
- during the step of pressing, the rollers apply a pressure on the external surfaces of the first and second stack of layers, the applied pressure being preferably greater or equal to 0.3 Mega Pascal (MPa) and lower or equal to 5.5 MPa.
- a speed of the first and second stacks of layers passing through the two rollers during the step of pressing is less than 10 meters per minute (m.min⁻¹).
- a plurality of flexible light-adjusting devices are obtained from the compressed component, the method further comprising the step of cutting the obtained compressed component to separate each flexible light-adjusting device from each other.
- the sealing material is curable, the method for manufacturing further comprising a step of curing the applied curable sealing material before the step of pressing and/or after the step of pressing by curing the compressed component.
- the electroactive material is injected in the reception area by using an injecting nozzle.
- during the step of adhering, the spacer particles are wet sprayed.
- before the step of adhering, the spacer particles are coated with an adhesive so as to adhere to the internal surface of the second stack of layers.
- each spacer particle is transparent.
- each spacer particle presents a diameter superior or equal to 3 micrometers and inferior or equal to 30 micrometers, and for example each spacer particle has a diameter superior or equal to 6 micrometers and inferior or equal to 12 micrometers.
- the electroactive material comprises ions.
- the method comprises a step of conveying the first and second stack of layers, the step of applying the sealing material, the step of injection and the step of pressing being carried out continuously during the convoy of the first and second stacks of layers.
- each of the conveyed first stack of layers and the second stack of layers is a single conveyable band.
- during the step of pressing, the conveyed first stack of layers and the conveyed second stack of layers are conveyed vertically by the two pressure rollers.
- at least a zone of the internal face of the conveyed first stack of layers and at least a zone of the internal face of the conveyed seconds stack of layers defines between each other an interstice located upstream from the two pressure rollers in respect with a convey direction defined by the pressure rollers, said interstice extending vertically and, during the step of injection, the light-adjusting material being injected inside the interstice.

The invention also concerns a flexible light-adjusting device electrically controllable able to present at least a tunable optical property using liquid crystals, the flexible light adjusting device being obtained by carrying out the method for manufacturing described above and comprising:
- a first stack of layers being transparent and flexible, the first stack of layers having an internal surface and an external surface, the first stack of layers comprising from its external surface to its internal surface, a first base layer and a first electrically conductive layer forming a first electrode of the flexible light-adjusting device, the first electrically conductive layer being a continuous layer, an area of the first electrically conductive layer being greater than or equal to 1 cm², preferably greater than or equal to 25 cm² and advantageously greater than or equal to 100 cm²,
- a second stack of layers being transparent and flexible, the second stack of layers having an internal surface and an external surface, the second stack of layers comprising from its external face to its internal face, a second base layer and a second conductive layer forming a second electrode of the flexible light-adjusting device, the second conductive layer being a continuous layer, an area of the second electrically conductive layer being greater than or equal to 1 cm², preferably greater than or equal to 25 cm² and advantageously greater than or equal to 100 cm²,
   the internal layers of the first and second stacks of layers facing each other,
- a sealing layer made of a sealing material delimiting with at least a portion of the internal surface of the first stack of layers and with at least a portion of the internal surface of the second stack of layers a sealed intermediate space,
- an electroactive layer comprising an electroactive material defining an active area of the flexible light-adjusting device, the electroactive material comprising at least a plurality of liquid crystals and, optionally, dyes, the electroactive layer extending inside the sealed intermediate space, the electroactive layer comprising a plurality of spacer particles included inside the electroactive material, the plurality of spacer particles separating the first stack of layers and the second stack of layers from each other, the electroactive layer being configured to switch between a first optical state in which the liquid crystals present a first arrangement in the electroactive layer and a second optical state in which the liquid crystals present a second arrangement in the electroactive layer, in function of a predetermined voltage applied to the electroactive layer via the first electrode and the second electrode,
   the switching between the first optical state and the second optical state causing a change in the setting of the optical property.

According to some embodiments of the flexible light-adjusting component, said tunable optical property is transmission haze, transmittance or reflectance of the electroactive layer.

The invention also concerns a glazing unit including the flexible light-adjusting device as described above and at least one glazing chosen in the following list of glazing: monolithic glazing, laminated glazing, double or triple glazing, curved or plane glazing, the flexible light-adjusting device being attached to said glazing.

The invention also concerns a wall for a building including the glazing unit as described above.

The wall for a building including the glazing unit forms for example at least in part an exterior wall, a window, a door, an interior partition or a furniture

The flexible light-adjusting device is also suitable for a vehicle.

The invention also concerns a vehicle comprising the glazing unit as described above.

For example, the roof, the windshield, the lateral glazing or the sidelites of the vehicle includes the glazing unit described above.

The invention and its advantages will be better understood upon reading the following description, which is given solely by way of non-limiting example and which is made in reference to the appended drawings in which:
- figure 1 is schematic cross sectional view of an embodiment of a glazing unit according to the invention comprising a light-adjusting device in a first optical configuration;
- figure 2 is schematic cross sectional view of the glazing unit of figure 1, wherein the light-adjusting device is in a second optical configuration;
- figure 3 is a front view of the glazing unit of figure 1 along arrow III shown on figure 1;
- figure 4 is a schematic representation of the steps of a first embodiment of a method for manufacturing the glazing unit of figure 1;
- figure 5 is a schematic view of the steps of a second embodiment of a method for manufacturing the glazing unit of figure 1;
- figure 6 is a schematic view of the steps of a third embodiment of a method for manufacturing the glazing unit of figure 1; and
- figure 7 is a schematic cross sectional view of another embodiment of a glazing according the invention.

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

It is also to be understood that the dimensions of the different elements are not to scale on the drawings.

As used herein, the term **"light-adjusting device electrically controllable presenting a tunable optical property using liquid crystals"** refers to a device presenting a tunable optical property in function of the application of a predetermined voltage to the liquid crystals. In particular, such light-adjusting device comprises an electroactive layer made of an electroactive material comprising liquid crystals and optionally dyes, extending in sandwich between two stacks of layers. Each stack of layers comprises an electrode. The electroactive layer arranged in sandwich between the two electrodes is configured to present at least a first optical state and a second optical state distinct from the first optical state. The electroactive layer is able to switch between the first optical state and the second optical state in function of a predetermined voltage applied to the electroactive layer via the two electrodes. The light-adjusting device is configured to present a first optical configuration when the electroactive layer is in the first optical state and the light-adjusting device is configured to present a second optical configuration when the electroactive layer is in the second optical state.

The term **"tunable optical property"** for example refers to the transmission haze, the transmittance or the reflectance of the electroactive layer and thus of the flexible light-adjusting device.

As used herein, the **"first optical state"** and **"second optical state"** corresponds to distinct optical states of the electroactive layer. In the first optical state, the tunable optical property has a first setting and, in the second optical state, the tunable optical property has a second setting distinct from the first setting. The state of the electroactive layer thus passes from the first optical state to the second optical state and *vice versa* depending on a predetermined voltage applied to the electroactive layer using the two electrodes. In particular, when a predetermined voltage is applied to the electroactive layer, the liquid crystals of the electroactive layer change orientation in the electroactive layer and thus their arrangement in the electroactive layer between the first optical state and the second optical state. Such reorganization of the liquid crystals in the electroactive layer involves a modification of the setting of the optical property of the electroactive layer between the first optical state and the second optical state.

As used here the term **"flexible"** refers to a component that can be deformable so that it can be rolled up on a roller and unrolled. In other words, such a flexible component can be used in a roll to roll process. Preferably, such flexible component can also be deformable by a user using his hands.

In the following, a longitudinal direction X is defined along an oriented axis X. A transversal direction Y is defined along an oriented axis Y, perpendicular to the longitudinal direction X. A vertical direction Z is also defined along an oriented axis Z perpendicular to the longitudinal direction X and the transversal direction Y.

In the following, unless otherwise specified, the length is measured along the longitudinal direction X, the width is measured along the transversal direction Y and the thickness is defined along the vertical direction Z.

The flexible light-adjusting device according to the invention described in the following is applicable:
- to the building industry notably to monolithic glazing or laminated glazing (plane or curved), double or triple glazing. Said glazing can be glazing for exterior walls, windows, door, interior partitions (including in humidity area such as, shower partition, etc.) or furniture, or other (interior) glazed surfaces. More particularly, the flexible light-adjusting device can be part of:
   ∘ an architectural glazing, i.e. glazing in buildings and on the envelope of buildings,
   ∘ an interior glazing such as a room interior glazing, partition glazing, interior windows and doors for offices, hotel rooms, shops, restaurants, homes, private rooms, medical spaces, bathrooms, for example shower compartment glazing,
   ∘ equipment manufacturing (e.g. glazing for refrigerators, microwaves, furniture, lighting, ...).
- to projecting screen,
- to vehicles such as motor vehicles, buses, railway vehicles or aircraft, to any part of glazing notably curved glazing, laminated or not, such as roof, windshield, lateral glazing, sidelites, etc.

The flexible light-adjusting device can cover only a part of the glazing, notably forms a band.

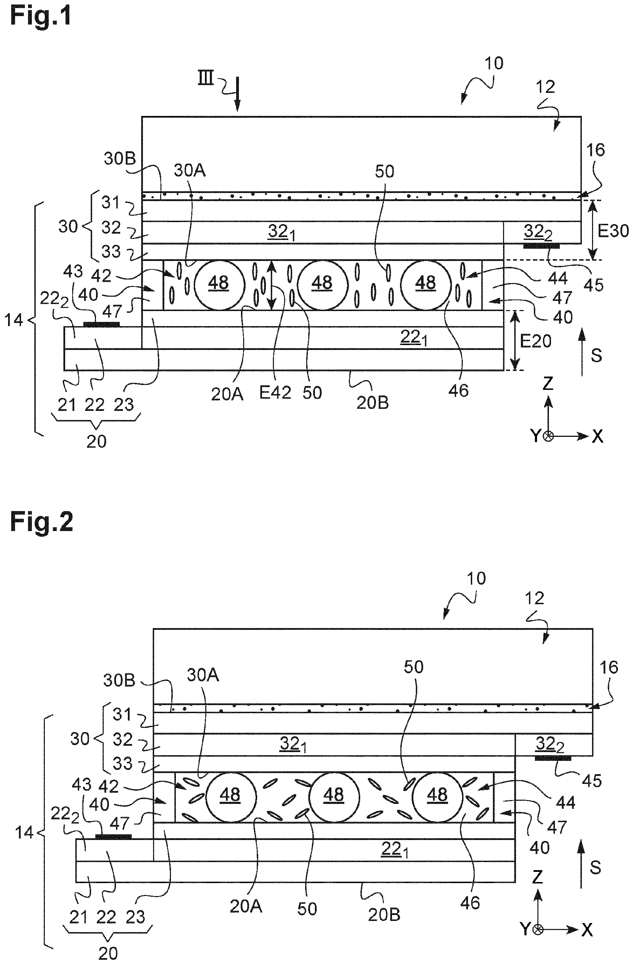

A first embodiment of a glazing unit 10 according to the invention is described in reference to figures 1 to 3.

The glazing unit 10 is able to present a variable optical property which is in the present example transmission haze.

As a variant or in complement, the glazing unit 10 is able to present at least another variable optical property, for example transmittance or reflectance.

The glazing unit 10 comprises a glazing 12, a flexible light-adjusting device 14 attached to a face of the glazing 12 and an intermediate layer 16 (i.e. adhesive layer).

The glazing 12 is transparent.

In the description, "transparent" designates an element through which it is possible to see, possibly without distortion.

In the present example, the glazing 12 is planar.

According to a variant, the glazing 12 is convex.

The glazing 12 is, for example, a monolithic glazing.

The monolithic glazing 12 comprises a single transparent pane.

The pane of the glazing is preferably made of glass, particularly preferably soda-lime glass, as is customary for window. However, the pane may also be made of other types of glass, for example quartz glass, borosilicate glass or alumino-silicate glass, or of rigid clear plastics, for example polycarbonate, polyethylene terephthalate (PET) or polymethyl methacrylate. The pane can be made of non-tempered, partially-tempered or tempered glass. The thickness of the pane can vary widely and be adapted to the requirements in individual cases.

Preferably, for vehicle applications, the thickness of the pane is from 0.1 mm to 10 mm and, in the case of glass, preferably from 1 mm to 5 mm, most preferably from 1.4 mm to 3 mm.

For building applications, the thickness of the pane is from 1 mm to 12 mm, for example from 3 mm to 8 mm and for example from 3 mm to 6 mm.

The transparent pane may be clear, extra clear or tinted.

The intermediate layer 16 is an adhesive layer.

For example, the intermediate layer 16 is an Optical Clear Adhesive (OCA) sheet.

The intermediate layer 16 is for example in Polyvinyl butyral (also known under the acronym "PVB").

The intermediate layer 16 extends in sandwich between the glazing 12 and the flexible light-adjusting device 14

The glazing unit 10 according to the invention may be used in the building industry or for vehicles as detailed above.

The flexible light-adjusting device 14 according to the invention is described in reference to figures 1, 2 and 3.

The flexible light-adjusting device 14 comprises a first stack of layers 20, a second stack of layers 30, a sealing layer 40 and an electroactive layer 42 extending in sandwich between the first stack of layers 20 and the second stack of layers 30.

The flexible light-adjusting device 14 is able to pass from a first optical configuration (figure 1) to a second optical configuration (figure 2) and *vice versa,* depending on the optical state of the electroactive layer 42.

The flexible light-adjusting device 14 is said in the first optical configuration when the electroactive layer 42 is in the first optical state (figure 1) and the flexible light-adjusting device 14 is said in the second optical configuration when the electroactive layer 42 is in the second optical state (figure 2).

The electroactive layer 42 is configured to switch between the first optical state and the second optical state depending on a voltage applied to the electroactive layer 42 via the electrodes of the flexible light-adjusting device 14, as this will be described in the following.

The first stack of layers 20 presents an internal surface 20A and an external surface 20B.

The first stack of layers 20 comprises, from its external surface 20B to its internal surface 20A, a first base layer 21, a first electrically conductive layer 22 and a first alignment layer 23.

The first base layer 21, the first electrically conductive layer 22 and the first alignment layer 23 are stacked along a stacking direction S.

In the present example, the stacking direction S is parallel to the vertical direction Z.

The layers 21, 22, 23 of the first stack of layers 20 are attached to each other.

The first stack of layers 20 is a unitary component.

The first base layer 21, the first electrically conductive layer 22 and the first alignment layers 23 are parallel to each other.

In the present example, the external surface 20B of the first stack of layers 20 is defined by the first base layer 21.

The first base layer 21 is a flexible layer.

The first base layer 21 is transparent.

The first base layer 21 is for example made in polyethylene terephthalate (also known under the acronym "PET"), in polycarbonate (also known under the acronym "PC"), in polyimide (also known under the acronym "PI") or in glass such as in the form of an ultrathin glass sheet.

The first electrically conductive layer 22 is a flexible layer.

The first electrically conductive layer 22 is transparent.

The first electrically conductive layer 22 forms a first electrode of the flexible light-adjusting device 14.

The first electrically conductive layer 22 is continuous. In other words, the first electrically conductive layer 22 is non-patterned.

For example, a width of the first electrically conductive layer 22 is greater than or equal to 1 centimeter, preferably greater than or equal to 5 centimeters and advantageously greater than or equal to 10 centimeters, and/or a length of the first electrically conductive layer 22 is greater than or equal to 1 centimeter, preferably greater than or equal to 5 centimeters and advantageously greater than or equal to 10 centimeters.

The first electrically conductive layer 22 forming the first electrode has an area superior or equal to 1 cm², preferably superior or equal to 25 cm² and advantageously superior or equal to 100 cm².

The first electrically conductive layer 22 has at least a first portion 22, and a second portion 22₂.

The first portion 22, of the first electrically conductive layer 22 extends in sandwich between the first base layer 21 and the first alignment layer 23.

The second portion 22₂ of the first electrically conductive layer 22 protrudes from an edge of the sealing layer 40 so as to form a first electrical contact.

The first electrical contact is configured to be connected for example to a first bus bar 43.

The second portion 22₂ extends for example on the base layer 21.

The length of the second portion 22₂ of the first electrically conductive layer 22 is strictly inferior to the length of the first portion 22, of the first electrically conductive layer 22.

For example, the length of the second portion 22₂ of the first electrically conductive layer 22 is less than or equal to 5 millimeters (mm) whereas the first portion 22, has a length preferably greater than of equal to 1 cm, preferably greater than or equal to 5 cm and advantageously superior or equal to 10 cm.

The first electrically conductive layer 22 is, for example, made of a transparent conductive oxide, such as for example Indium Tin Oxide (also known under the acronym "ITO").

The first alignment layer 23 is a flexible layer.

The first alignment layer 23 is transparent.

A thickness of the first alignment layer 23 is, for example, inferior or equal to 100 nanometers (nm).

The first alignment layer 23 is for example made of polyimide.

The first alignment layer 23 is attached to the first electrically conductive layer.

The first alignment layer 23 is for example coated, for example using slit coating, or printed on the first electrically conductive layer 22.

In the present example, the first alignment layer 23 defines the internal surface 20A of the first stack of layers 20.

In the present example, the first alignment layer 23 enables a homotopic alignment of liquid crystals.

According to a variant, the first alignment layer 23 enables homogenous alignment or a hybrid alignment of liquid crystals.

The thickness E20 of the first stack of layers 20 is for example greater than or equal to 50 micrometers and less than or equal to 500 micrometers, for example greater than or equal to 80 micrometers and less than or equal to 300 micrometers, for example greater than or equal to 100 micrometers and less than or equal to 200 micrometers.

The second stack of layers 30 presents an internal surface 30A and an external surface 30B.

The second stack of layers 30 comprises from its external surface 30B to its internal surface 30A, a second base layer 31, a second electrically conductive layer 32 and a second alignment layer 33.

In the present example shown on figures 1 and 2, the glazing 12 is attached to the external surface 30B of the second stack of layers 30, the intermediate layer 16 extending between a face of the glazing 12 and at least a portion of the external surface 30B of the second stack of layers 30.

The second base layer 31, the second electrically conductive layer 32 and the second alignment layers 33 are stacked along the stacking direction S.

The second base layer 31, the second electrically conductive layer 32 and the second alignment layers 33 are parallel to each other.

In the present example, the external surface 30B of the second stack of layers 30 is defined by the second base layer 31.

The second base layer 31 is a flexible layer.

The second base layer 31 is transparent.

The second base layer 31 is for example made in PET, PC PI or glass such as in the form of an ultrathin glass sheet.

The second electrically conductive layer 32 is a flexible layer.

The second electrically conductive layer 32 is transparent.

The second electrically conductive layer 32 forms a second electrode of the flexible light-adjusting device 14.

The second electrically conductive layer 32 is continuous. In other words, the second electrically conductive layer 32 is non-patterned.

For example, a width of the second electrically conductive layer 32 is greater than or equal to 1 centimeter, preferably greater than or equal to 5 centimeters and advantageously greater than or equal to 10 centimeters, and/or a length of the second electrically conductive layer 32 is greater than or equal to 1 centimeter, preferably greater than or equal to 5 centimeters and advantageously greater than or equal to 10 centimeters.

The second electrically conductive layer 32 forming the second electrode has an area superior or equal to 1 cm², preferably superior or equal to 25 cm² and advantageously superior or equal to 100 cm².

The second electrically conductive layer 32 has at least a first portion 32, and a second portion 32₂.

The first portion 32, of the second electrically conductive layer 32 extends in sandwich between the second base layer 31 and the second alignment layer 33.

The first portion 32, of the second electrically conductive layer 32 extends in sandwich between the second base layer 31 and the second alignment layer 33.

The second portion 32₂ of the second electrically conductive layer 32 protrudes from an edge of the sealing layer 40 so as to form a second electrical contact.

The second electrical contact is configured to be connected, for example, to a second bus bar 45.

The length of the second portion 32₂ of the second electrically conductive layer 32 is strictly inferior to the length of the first portion 32, of the second electrically conductive layer 32.

For example, the length of the second portion 32₂ of the second electrically conductive layer 32 is inferior or equal to 5 mm.

The second electrically conductive layer 32 is, for example, made of a transparent conductive oxide, such as for example ITO.

The second alignment layer 33 is a flexible layer.

The second alignment layer 33 is transparent.

A thickness of the second alignment layer 33 is, for example, inferior or equal to 100 nm.

The second alignment layer 33 is for example made of polyimide.

The second alignment layer 33 is attached to the second electrically conductive layer 32.

The second alignment layer 33 is for example coated, for example using slit coating, or printed on the first electrically conductive layer.

In the present example, the second alignment layer 33 defines the internal surface 30A of the second stack of layers 30.

The internal surface 30A of the first stack of layers 20 and the internal surface 30A of the second stack of layers 30 faces each other along the stacking direction S and delimit a space between each other.

The thickness E30 of the second stack of layers 30 is for example greater than or equal to 50 micrometers and less than or equal to 500 micrometers, for example greater than or equal to 80 micrometers and less than or equal to 300 micrometers, for example greater than or equal to 100 micrometers and less than or equal to 200 micrometers.

The sealing layer 40 is flexible.

The sealing layer 40 is transparent.

The sealing material 47 is made in a UV curing hot melt adhesive.

The sealing layer 40 delimits with the internal surface 20A of the first stack of layers 20 and the internal surface 30A of the second stack of layers 30 an intermediate space 44.

The intermediate space 44 is for example a sealed intermediate space 44.

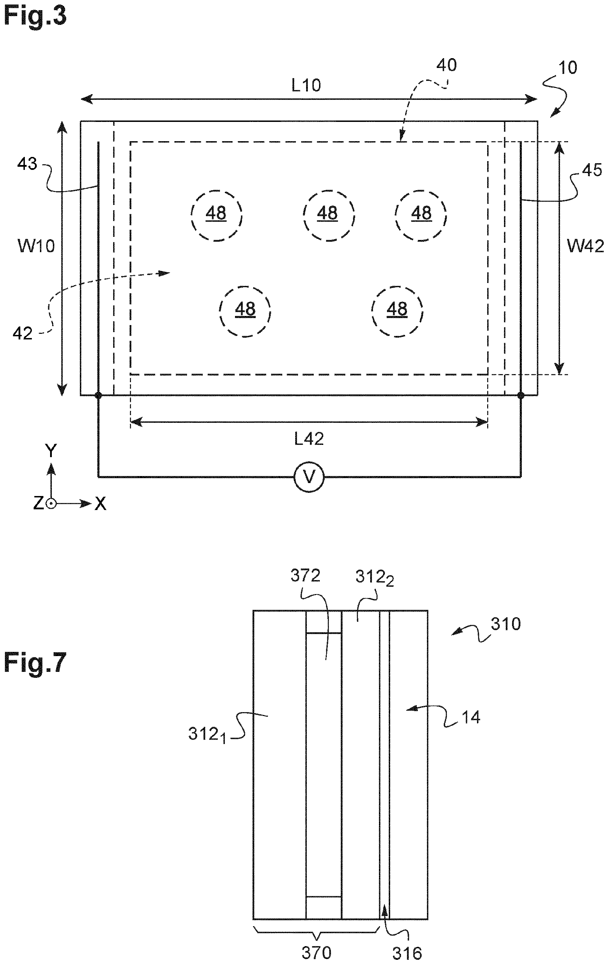

As shown on figure 3, the sealing layer 40 delimits, for example, a closed contour extending in sandwich between a peripheral zone of the internal surface 20A of the first stack of layers 20 and a peripheral zone of the internal surface 30A of the second stack of layers 30.

The sealing layer 40 in figure 3 is represented using dotted line since it is included inside the flexible light-adjusting device 14.

The electroactive layer 42 defines an active area of the flexible light-adjusting device 14.

The electroactive layer 42 comprises an electroactive material 46.

As shown on figures 1 and 2, the electroactive layer 42 comprises the electroactive material 46 and spacer particles 48 included inside the electroactive material 46. The electroactive material 46 can be seen as a matrix wherein the spacer particles 48 are included.

The electroactive layer 42 fills the intermediate space 44. In other words, the electroactive layer 42 extends in sandwich between the internal surface 20A of the first stack of layers 20 and the internal surface 30A of the second stack of layers 30 and is peripherally delimited by the sealing layer 40.

The electroactive material 46 comprises liquid crystals 50.

The electroactive material does not comprise polymer or a rate of polymer lower than 15% in weight.

The liquid crystals 50 are for example nematic liquid crystals.

According to a variant, the liquid crystals are smectic liquid crystals, guest-host liquid crystals, cholesteric liquid crystals, polymer network liquid crystals, polymer stabilized cholesteric crystals or polymer dispersed liquid crystals.

According to a particular embodiment, the light adjusting material further comprises, for example, dyes.

The dyes are for example dichroic dyes.

According to a particular example, the electroactive material 46 for example comprises ions.

The spacer particles 48 are included inside the electroactive material 46.

For example, each of the spacer particles 48 presents the shape of a sphere. As a variant, at least one or each of the spacer particles presents a shape distinct from a sphere.

Each of the spacer particles 48 presents a thickness greater than or equal to 3 micrometers and less than or equal to 30 micrometers, and for example, each spacer particle 48 has a thickness greater than or equal to 6 micrometers and less than or equal to 12 micrometers. The thickness of the spacer particles 48 being measured along the direction separating the first and second stacks of layers 20, 30.

Each spacer particle 48 is made in silicon dioxide having the chemical formula SiO₂.

According to a variant, the spacer particles 48 are photo spacer particles.

Each spacer particle 48 extends in the intermediate space 44 between the internal surface 20A of the first stack of layers 20 and the internal surface 30A of the second stack of layers 30.

More particularly, each spacer particles 48 is arranged in contact with the internal surface 20A of the first stack of layers 20 and the internal surface 30A of the second stack of layers 30.

The spacer particles 48 enable to separate the internal surface 20A of the first stack of layers 20 and the internal surface 30A of the second stack of layers 30 from each other.

Preferably, the spacer particles 48 are uniformly arranged inside the electroactive layer 42.

The spacer particles 48 are glued to the internal surface 30A of the second stack of layers 30.

For example, a layer of glue extends on the surface of each spacer particles 48.

The thickness E42 of the electroactive layer 42 corresponds to the thickness of the spacer particles.

The thickness E42 of the electroactive layer 42 is superior or equal to 3 micrometers and inferior or equal to 30 micrometers, and for example is superior or equal to 6 micrometers and inferior or equal to 12 micrometers.

A length L42 of the electroactive layer 42 forming the active area of the flexible light-adjusting device 14 is greater than or equal to 1 cm, preferably greater than or equal to 5 cm and advantageously greater than or equal to 10 cm.

A width W42 of the electroactive layer 42 forming the active area of the flexible light-adjusting device 14 is greater than or equal to 1 cm, preferably greater than or equal to 5 cm and advantageously greater than or equal to 10 cm.

A length L10 of the glazing unit 10 is greater than or equal to 1 cm, preferably greater than or equal to 5 cm and advantageously greater than or equal to 10 cm.

A width W10 of the glazing unit 10 is greater than or equal to 1 cm, preferably greater than or equal to 5 cm and advantageously greater than or equal to 10 cm.

A method for using the glazing unit 10 according to the invention will now be explained.

Initially, the electroactive layer 42 is in the first optical state (figure 1).

In the present example, the first optical state corresponds to a first scattering state.

In the first optical state, the liquid crystals 50 of the electroactive layer 42 presents a first arrangement in the electroactive layer 42.

The first arrangement corresponds for example to an alignment of the liquid crystals along a direction substantially perpendicular to the first and second stacks of layers 20, 30.

In the first optical state, the electroactive layer 42 presents a first transmission haze rate.

The first transmission haze rate in the first optical state is for example strictly less than 80%, preferably less than or equal to 15% and advantageously less than or equal to 10%.

The haze rate is, for example, defined as the ratio of the diffuse transmission of light to the total transmission of light. It is preferably expressed in %.

The haze rate is for example obtained from an ASTM measurement standard (D1003).

The haze rate is measured, for example, with a haze meter.

In the present example, the first haze rate is such that the electroactive layer 42 is transparent, that is to say it is possible to see through the electroactive layer 42.

For example, the first transmission haze rate corresponds to the lowest haze rate of the electroactive layer 42.

In the first optical state according to this example, it is thus possible to see through the flexible light-adjusting device 14 and thus through the glazing unit 10.

The first and second alignment layers 23, 33 force the liquid crystals 50 to align.

When a first predetermined voltage V is applied to the electroactive layer 42 via the first and the second electrically conductive layers 22, 32, the electroactive layer 42 passes from the first optical state to the second optical state due to a reorganization of the liquid crystals 50 inside the electroactive material 46 of the electroactive layer 42.

The first predetermined voltage is for example a non-null voltage.

The second optical state correspond to a second scattering state of the electroactive layer 42.

In the second optical state, the electroactive layer 42 presents a second transmission haze rate.

The second transmission haze rate is strictly greater than the first transmission haze rate.

The second transmission haze rate is for example such that the electroactive layer 42 is opaque, that is to say it is not possible to see through the electroactive layer 42.

The transmission haze rate in the second optical state which here corresponds to an opaque state is for example equal to 80% for an applied alternating voltage of 50 volts (V).

In the second optical state, the liquid crystals 50 presents a second arrangement in the electroactive layer 42.

In the second arrangement, the liquid crystals 50 are arranged in a disordered manner, as shown on figure 2.

In the second optical state, it is not possible to see through the flexible light-adjusting device 14 and thus through the glazing 10.

When a second predetermined voltage V is applied to the electroactive layer 42, the electroactive layer 42 returns in the first optical state.

The second predetermined voltage V is for example a null voltage.

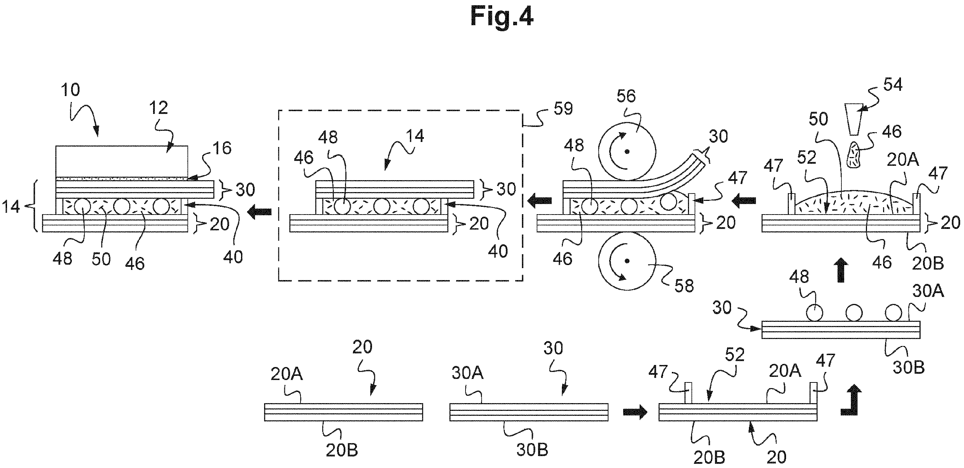

A method for manufacturing the glazing unit 10 according to a first embodiment is described in the following in view of figure 4.

The method for manufacturing the glazing 10 comprises the manufacturing for the light-adjusting device 14.

The method for manufacturing the flexible light-adjusting device 14 comprises a step of providing the first stack of layers 20 being transparent and flexible.

The method for manufacturing the flexible light-adjusting device 14 comprises a step of providing the second stack of layers 30 being transparent and flexible.

The method comprising a step of adhering a plurality of spacer particles 48 on the internal surface 30A of the provided second stack of layers 30.

The spacer particles 48 adhere to the internal surface 30A of the provided second stack 30 of layers 30 though the layer of glue coated on the external surface of the spacer particles 48.

Before the step of adhering, the external surface of the spacer particles 48 are coated with glue.

For example, during the step of adhering, the spacer particles 48 coated with glue are wet sprayed on the internal surface 30A of the second stack of layers 30.

Wet spraying comprises mixing evenly the spacer particles 48 coated with glue in organic solvent to form a spacer particles solution, spraying the spacer particles solution on the internal surface 30A of the second stack of layers 30, and placing on a heating device the second stack of layers 30 coated with the spacer particles solution. After a few seconds, the organic solvent volatizes and, at the same time, the spacer particles 48 are directly attached to the internal surface 30A of the second stack of layers 30 without any additional heating step.

Said organic solvent is for example alcohol.

According to a variant, the spacer particles 48 coated with glue are dry sprayed on the internal surface 30A of the second stack of layers 30.

Dry spraying may require an additional heating step for heating the spread spacer particles 48 coated with glue so that the spacer particles 48 adhere to the internal surface 30A of the second stack of layers 30.

No spacer particle 48 adheres to the internal surface 20A of the provided first stack of layers 20.

The step of adhering the internal surface 30A of the second stack of layers 30 is carried out before steps of pressing and introduction detailed in the following.

The method for manufacturing the flexible light-adjusting device 14 comprises a step of applying the sealing material 47 to the internal surface 20A of the provided first stack of layers 20 for defining a contour of sealing material 47.

The sealing material 47 is for example applied by a thermal dispenser.

The thermal dispenser is for example a nozzle.

According to a variant, the sealing material 47 is applied by printing, for example screen printing, letterpress printing or gravure printing.

The UV curing hot melt adhesive used as the sealing material 47 has good compatibility with the electroactive material 46 and in particular with the liquid crystals 50 of the electroactive material 46. In particular, the UV curing hot melt adhesive used as the sealing material 47 does not melt with the electroactive material 46.

Moreover, the UV curing hot melt adhesive has long-term stability.

According to a variant, the sealing material 47 is a moisture hardening glue, a hot melt glue, a thermal curing adhesive, a UV curing adhesive or a pressure sensitive adhesive.

The contour of the sealing material 47 delimits on the internal surface 20A of the first stack of layers 20 at least a portion of a reception area 52 of the electroactive material 46.

In the present example, the defined contour of sealing material is a closed contour.

According to a variant, the defined contour is an open contour (i.e. non closed contour).

The applied sealing material 47 is intended to form at least a part of the sealing layer 40 of the flexible light-adjusting device 14.

In the present example, the applied sealing material 47 is intended to form the entire sealing layer 40 of the flexible light-adjusting device 14.

The sealing material 47 being a UV curing hot melt adhesive does not need to be precured before the step of pressing.

In the example shown on figure 4, after the step of applying the sealing material 47 and before said step of pressing, the method for manufacturing comprises a step of injecting the electroactive material 46 comprising the liquid crystals 50 inside the reception area 52 so as to fill at least a zone of the reception area 52 with the electroactive material 46.

As shown on figure 4, the electroactive material 46 is injected toward the reception area 52 during the step of injecting.

The step of injecting the electroactive material 46 is carried out under atmospheric pressure.

The injected electroactive material 46 comprises a viscosity superior or equal to 0.01 Pascal second (Pa.s), and preferably superior or equal to 0.01 Pa.s and inferior or equal to 2 Pa.s.

For example, the first stack of layers 20 provided with the sealing material 47 extends horizontally during the step of injection.

For example, the electroactive material 46 is injected using a nozzle 54.

The nozzle 54 for example faces a central zone of the reception area 52 along the vertical direction Z.

A quantity of electroactive material 46 injected is such that the electroactive material 46 fill the entire intermediate space defined between the internal surfaces 20A, 30A of the first and second stack of layers 20, 30 and the applied sealing material 47 during the step of pressing described in the following.

The method for manufacturing the flexible light-adjusting device 14 further comprises a step of introducing the spacer particles 48 adhering to the internal face 30A of the second stack of layers 30 in the electroactive material 46 filling at least a zone of the reception area 52 of the first stack of layers 20.

During the step of introducing, the spacer particles 48 adhering to the internal surface 30A of the second stack of layers 30 are immersed inside the electroactive material 46 filling at least a zone of the reception area 52. In other words, during the step of introducing, the spacer particles 48 dive inside the electroactive material 46 filling at least a zone of the reception area 52.

The method further comprises step of pressing against each other the first stack of layers 20 comprising the light adjusting material 46 filling at least a zone of the reception area 52 and the second stack of layers 30 provided with the spacer particles 48 to bond them to each other to obtain a compressed component.

The step of pressing is also commonly known as "lamination", and in particular to "rolling lamination".

The step of pressing is carried out by two pressure rollers 56, 58 having opposite winding directions though which the first and second stacks of layers are conveyed.

The two pressure rollers 56, 58 define a gap through which the first and second stack of layers 20, 30 are conveyed.

The gap between the two pressure rollers 56, 58 is strictly lower than the sum of the thickness of the first stack of layers 20, a thickness of the applied sealing material 47 and the thickness of the second stack of layers 30 before pressing.

The two pressure rollers 56, 58 rotate along a direction perpendicular to the vertical axis Z.

In the present example, the two pressure rollers 56, 58 rotate along the transversal direction Y.

The two pressure rollers 56, 58 are superposed on one another along the vertical direction Z.

During the step of pressing, the internal surfaces 20A, 30A of the first and second stacks of layers 20, 30 face each other.

During the step of pressing, a pressure roller 58 of the two pressure rollers is in contact with the external surface 20A of the first stack of layers 20 and another pressure roller 56 of the two rollers is in contact with the external surface 30B of the second stack of layers 30.

The two pressure rollers 56, 58 apply pressure on the external faces 20B, 30B of the first and second stacks of layers 20, 30.

The two pressure rollers 56, 58 apply a pressure on the external surfaces of the first and second stacks of layers 20, 30, the applied pressure being greater or equal to 0.3 mega Pascal (MPa) and lower or equal to 5.5 MPa.

More particularly, during the step of pressing a part of the internal surface 30A of the second stack of layers 30 is in contact with the sealing material 47 applied on the internal surface 20A of the first stack of layers 20.

During the step of pressing, the spacer particles come in contact and adhere to the internal surface 20A of the first stack of layer 20 delimiting the reception area 52 so that the spacer particles separate the first and second stacks of layers 20, 30 from each other.

A speed of the first and second stacks of layers 20, 30 passing through the two pressure rollers 56, 58 during the step of pressing is less than or equal to 10 meters per minute (m.min⁻¹).

According to a specific example, the speed of the first and second stacks of layers 20, 30 passing through the two pressure rollers 56, 58 during the step of pressing is less or equal to 0.4 m.min⁻¹. According a particular example, the speed of the first and second stacks of layers 20, 30 passing through the two pressure rollers 56, 58 during the step of pressing is less or equal to 0.4 m.min⁻¹ and is greater or equal to 0.1 m.min⁻¹ and less or equal to 0.4 m.min⁻¹.

In the example shown on figure 4, the step of introducing the spacer particles 48 inside the electroactive material 46 filling a zone of the reception area 52 and the step of pressing the two stacks of layers 20, 30 are carried out at the same time.

In other words, the spacer particles 48 are introduced inside the electroactive material 46 filling the reception area 52 by the pressing of the first stack of layers 20 and the second stack of layers 30 against each other.

The step of introduction of the spacer particles 48 devoid of electroactive material 46 inside the injected electroactive material 46 enables to limit the apparition of bubbles between the spacer particles 48 and the electroactive material 46 in the flexible light-adjusting device 14.

The first and second stacks of layers 20, 30 are conveyed substantially horizontally by the two pressure rollers 56, 58 during the step of pressing.

Advantageously, during the step of pressing, the two pressure rollers 56, 58 are heated.

The pressure rollers 56, 58 are heated at a temperature greater or equal to 80 degrees Celsius (°C) and less or equal to 150°C.

The step of pressing is carried out under atmospheric pressure.

In the present example, the method comprises a step of final curing the obtained compressed component to cure the sealing material 47.

The final curing is for example realized in a curing station 59.

For example, the final curing consists in an UV ("ultraviolet") exposure of the compressed component, such as a UV exposure for few minutes.

In this case, the obtained compressed component corresponds to the flexible light-adjusting device 14.

The method for manufacturing the glazing 10 further comprises a step of attaching the obtained flexible light-adjusting device 14 by the method for manufacturing said flexible light-adjusting device 14 to a face of the glazing 12 with the intermediate layer 16 extending between the face of the glazing 12 and the flexible light-adjusting device 14 obtained.

According to a variant of the method for manufacturing said flexible light-adjusting device 14, the sealing material 47 is a moisture hardening glue. In this case, the method for manufacturing thus comprises a pre-curing step and a final curing step for curing the sealing material applied to the internal surface of the first stack of layers. The pre-curing step and the final curing step consist in waiting for few seconds, for example 10 seconds. For example, the pre-curing time is comprised between 10 seconds and 10 minutes, for example 8 minutes. For example, the final curing time is comprised between 10 seconds and 60 minutes, for example 30 minutes.

During, the step of application of the sealing material 47, the sealing material 47 does not need to be heated.

The moisture hardening glue has good compatibility with the electroactive material 46 and in particular with the liquid crystals 50 of the electroactive material 46. In particular, the UV curing hot melt adhesive does not melt with the electroactive material 46 injected during a step of injection described in the following. Moreover, the moisture hardening glue presents a long-term stability.

According to a variant of the method for manufacturing said flexible light-adjusting device 14, the sealing material 47 is hot melt glue. In this case, the method for manufacturing does not comprise any final curing step.

According to another variant of method for manufacturing said flexible light-adjusting device 14, the sealing material is a thermal curing adhesive. In this case, the method for manufacturing thus comprises a pre-curing step and a final curing step for curing the sealing material applied to the internal surface of the first stack of layers. The pre-curing step and the final curing step consist in waiting for few seconds, for example 10 seconds. During, the step of application of the sealing material 47, the sealing material 47 does not need to heated.

According to another variant of method for manufacturing said flexible light-adjusting device 14, the sealing material is a UV curing adhesive. In this case the method for manufacturing thus comprises a pre-curing step for curing the sealing material applied to the internal surface of the first stack of layers. The pre-curing step consists in an UV exposure of the compressed component, such as a UV exposure for few minutes. During, the step of application of the sealing material 47, the sealing material 47 does not need to heated.

According to another variant of the method for manufacturing said flexible light-adjusting device 14, the sealing material is a pressure sensitive adhesive. In this case, the method for manufacturing does not comprise any pre-curing step and any final curing step. During, the step of application of the sealing material 47, the sealing material 47 does not need to heated.

The method for manufacturing the flexible light-adjusting device 14 according to the invention can be carried out under atmospheric pressure. Moreover, thanks to the method for manufacturing, a satisfying flexible light-adjusting device 14 is obtained since the method for manufacturing according to the invention enables to limit the apparition of bubbles in the electroactive layer 42 comprising the electroactive material 46 and the spacer particles 48 incorporated inside the electroactive material 46.

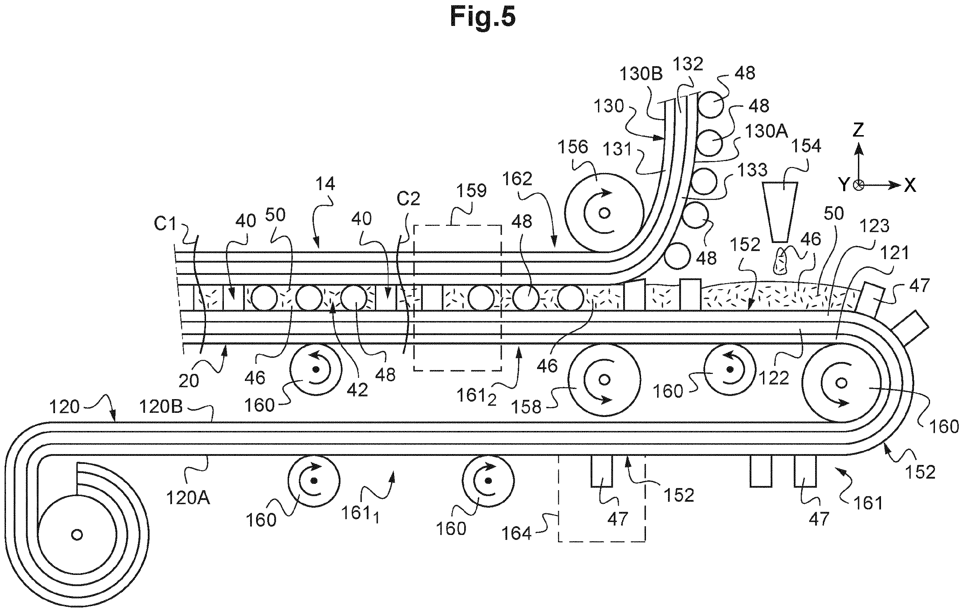

A second embodiment of the method for manufacturing the glazing unit 10 is described in the following in reference to figure 5.

The method for manufacturing the glazing unit described in reference to figure 5 is described only by differences as compared to the method for manufacturing of figure 4.

The method for manufacturing of the glazing of figure 5 differs from the method for manufacturing of figure 4 by the method for manufacturing the flexible light-adjusting device 14.

The method for manufacturing the flexible light-adjusting device 14 corresponds to a roll-to-roll manufacturing.

The manufacturing of the flexible light-adjusting device 14 is carried out during a continuous process enabling to manufacture a plurality of flexible light-adjusting devices 14 continuously.

The method for manufacturing the flexible light-adjusting device 14 is carried in a production line.

During the step of providing the first stack of layers, a first stack of layers 120 enabling to realize a plurality of flexible light adjusting devices 14 is provided.

The provided first stack of layers 120 corresponds to a single conveyable band ("first stack of layers 120 forming a band", in the following).

The first stack of layers 120 forming a band comprises an internal surface 120A and an external surface 120B.

The first stack of layers 120 forming a band comprises from its external surface 120B to its internal surface a first base layer 121, a first electrically conductive layer 122 and a first alignment layer 123.

The first base layer 121 is of the same nature as the first base layer 21 of the flexible light-adjusting device 14.

The first electrically conductive layer 122 is of the same nature as the first electrically conductive layer 22 of the flexible light-adjusting device 14.

The first electrically conductive layer 122 is a continuous layer (i.e. non patterned layer).

The first alignment layer 123 is of the same nature as the first alignment layer 23 of the flexible light-adjusting device 14.

The method for manufacturing further comprises a step of conveying the first stack of layers 120.

As shown on figure 5, the production line comprises drive rollers 160 defining a first manufacturing line 161 for conveying the first stack of layers 120 forming a band.

The first manufacturing line 161 comprises a first portion 161₁ and a second portion 161₂.

The first manufacturing line 161 enables to convey the first stack of layers 120 forming a band horizontally. In particular, in the first portion 161₁ of the first line 161, the internal surface 120A of the first stack of layers 120 forming a band is oriented in a direction opposed to the vertical axis Z.

The second portion 161₂ of the first manufacturing line 161 enables to convey horizontally the first stack of layers 120 forming a band.

The second portion 161₂ of the first manufacturing line 161 enables to convey horizontally the first stack of layer 120 forming a band.

In particular, in second portion 161₂ of the first manufacturing line 161, the internal surface 120A of the first stack of layers 120 forming a band is oriented in the same direction as the vertical axis Z.

At least one drive roller 160 of the drive rollers is a return roller allowing first stack of layers 120 forming a band to pass from the first portion 161₁ to the second portion 161₂ .

In the present example shown on figure 5, during the step of application of the sealing material 47, the sealing material 47 is applied on the internal surface 120A of the conveyed first stack of layers 120 forming a band so as to define a plurality of separate reception areas 152.

The application of the sealing material 47 is for example carried out by a sealing material application station 164 when the first stack of layers 120 forming a band is conveyed in the first line 161.

The sealing material 47 is advantageously printed on the internal surface 120A of the first stack of layers 120.

The step of providing the second stack of layers comprises providing a second stack of layers 130 enabling to realize a plurality of flexible light-adjusting devices 14.

The provided second stack of layers 130 corresponds to a single conveyable band ("second stack of layers 130 forming a band", in the following).

The second stack of layers 130 forming a band comprises an internal surface 130A and an external surface 130B.

The second stack of layers 130 forming a band comprises from its external surface 130B to its internal surface 130A, a second base layer 131, a second electrically conductive layer 132 and a second alignment layer 133.

The second base layer 131 is of the same nature as the second base layer 31 of the flexible light-adjusting device 14.

The second electrically conductive layer 132 is of the same nature as the second electrically conductive layer 22 of the flexible light-adjusting device 14.

The second electrically conductive layer 132 is a continuous layer (i.e. non patterned layer).

The second alignment layer 133 is of the same nature as the first alignment layer 33 of the flexible light-adjusting device 14.

The method for manufacturing further comprises a step of conveying the second stack of layers 130 forming a band.

The second stack of layers 130 forming a band is conveyed along a second line 162 of the production line.

For example, the step of adhering spacer particles 48 to the internal face 130A of the second stack of layers 130 forming a band is carried out during the convoy of the second stack of layers 130 forming a band and before the step of pressing.

The spacer particles 48 are for example evenly distributed on the internal surface 130A of the conveyed second stack of layers 130 forming a band.

The spacer particles 48 adheres to the internal surface 130A of the second stack of layers 130 forming a band.

During the step of injecting the electroactive material 46, the electroactive material 46 is injected in at least a zone of each reception area 152 defined on the internal surface 120A of the conveyed first stack of layers 120 forming a band so that each reception area 152 is filled with electroactive material 46.

The step of injecting the electroactive material 46 is for example carried out when the first stack of layers 120 forming a band is located along the second line 162 by an injecting station comprising a nozzle 154.

The step of pressing is carried out continuously.

In particular, during the step of pressing between the two rollers 156, 158, the conveyed first stack of layers 120 forming a band provided with the injected electroactive material 46 filling at least a zone of the reception area 152 and the conveyed second stack of layers 130 forming a band provided with the spacer particles 48 adhering to the internal face 130A of the second stack of layers 130 forming a band are pressed against each other.

In the example shown on figure 5, the first and second stacks of layers 120, 130 forming bands are conveyed substantially horizontally during the step of pressing between the two rollers 156, 158.

The method for manufacturing further comprises a step of final curing the compressed component.

The step of final curing is carried out by a curing station 159 of the compressed component.

The method for manufacturing further comprises a step of cutting the obtained cured compressed component so as to separate the flexible light-adjusting devices 14 from each other.

Advantageously, the cutting is carried out between two adjacent sealing layers defining an intermediate space 44.

The lines of cut are schematically identified by the numeral references C1 and C2.

Optionally, the method for manufacturing comprises finishing steps to delimit the first and second electric contacts.

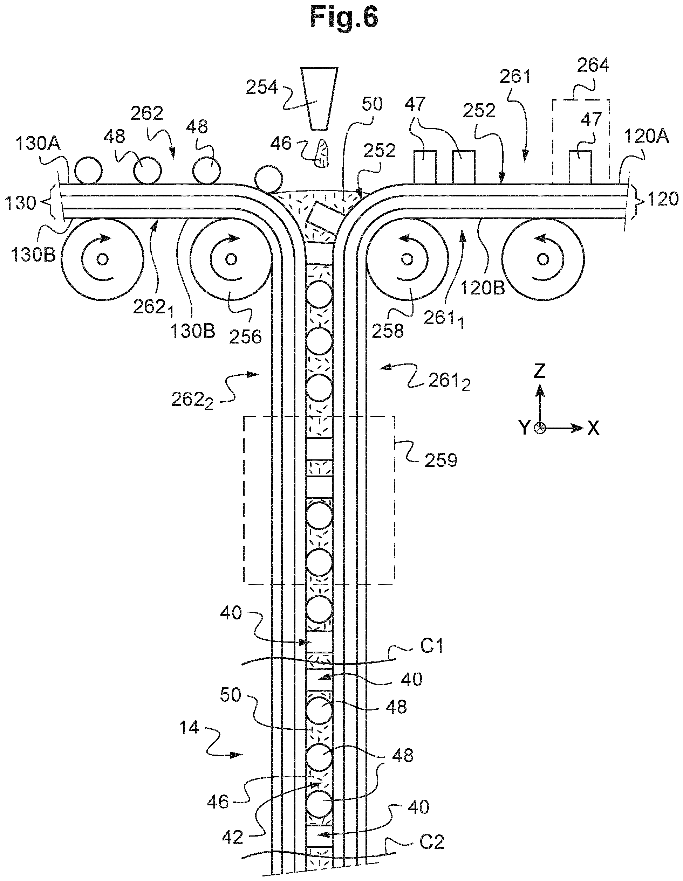

Another embodiment of the method for manufacturing the glazing according to the invention is described in the following in reference to figure 6.

The method for manufacturing described in reference to figure 6 is described only by differences as compared to the method for manufacturing of figure 5.

The method for manufacturing of the glazing of figure 6 differs from the method for manufacturing of figure 5 by the manufacturing of the flexible electroactive material.

The first stack of layers 120 forming a band is conveyed along a first line presenting a first portion 261₁ and 261₂ extending substantially perpendicularly to each other.

The first portion 261₁ extends substantially horizontally and extend along the longitudinal direction X.

The second portion 261₂ extends substantially vertically along the vertical direction Z.

The second stack of layers 130 forming a band is conveyed along a second line 262 presenting a first portion 262₁ and 262₂ extending substantially perpendicular to each other.

The first portion 262₁ extends substantially horizontally and extend along the longitudinal direction X.

The second portion 262₂ extends substantially vertically along the vertical direction Z.

The step of application of the sealing material 47 to the internal surface of the first stack of layers 120 forming a band, the sealing material 47 is applied on the internal surface 120A of the conveyed first stack of layers 120 forming a band so as to define a plurality of separate reception areas 252.

The application of the sealing material 47 is for example carried out by a sealing material application station 264 when the first stack of layer 120 forming a band is conveyed horizontally, in the first portion 261₁ of the first line 261.

The second stack of layer 130 comprising the spacer particles 48 adhering to the internal surface 130A of the second stack of layers 130 forming a band and which are devoid of electroactive material 46 is conveyed horizontally in the first portion 262₁ of the second line 262.

The first stack of layers 120 forming a band and the second stack of layers 130 forming a band converge towards each other when they are conveyed on the first portions 261₁, 262₁ of each of the first and second lines 261, 262 so as to reach the second portions 261₂, 262₂ of the first and second lines.

The two pressure rollers 256, 258 guide the two stacks of layers from the first portions 261₁, 262₁ of each of the first and second lines 261, 262 towards the second portions 261₂, 262₂ of the first and second lines.

Before reaching the two pressure rollers 256, 258, the first stack of layers 120 forming a band and the second stack of layers 130 forming a band defines an interstice.

At least a zone of the internal face 120A of the conveyed first stack of layers 120 and at least a zone of the internal face of the conveyed second stack of layers 130 define between each other an interstice.

The interstice is for example located upstream from the two pressure rollers 256, 258 in respect with a convey direction defined by the pressure rollers 256, 258.

The interstice extends vertically.

The interstice is for example defined by a curved zone of the internal face 120A of the conveyed first stack of layers 120 and a curved zone of the internal face 130A of the conveyed second stack of layers 130.

Said curved zones corresponds to corner portions of the internal face 120A of the conveyed first stack of layers 120 and of the internal face 130A of the conveyed second stack of layers 130.

Those corner portions face each other along a direction perpendicular to the vertical direction Z.

During the step of injection, the light-adjusting material 46 is injected inside the interstice so that the electroactive material 46 fills at least a zone of the reception area defined in the internal surface 120A of the first stack of layers 120 forming a band.

The spacer particles 48 adhering to the internal surface 130A of the second stack of layers 130 and devoid of electroactive material 46 are introduced inside the electroactive material 46 located inside the interstice comprising the injected electroactive material 46.

The step of injecting the electroactive material 46 is for example carried by an injecting station comprising a nozzle 254 located in front of the interstice along the vertical direction Z.

The step of introduction is carried out before the step of pressing.

During the step of pressing, the first and second stacks of layers 120, 130 are conveyed substantially vertically between the two rollers 256, 258 during the step of pressing.

The two pressure rollers 256, 258 have opposite winding directions though which the first and second stacks of layers 120, 130 forming a band are conveyed.

The two pressure rollers 256, 258 rotate along a direction perpendicular to the vertical axis Z.

In the present example, the two rollers 256, 258 rotate along a rotation axis parallel to the transversal direction Y.

The two pressure rollers 256, 258 are superposed on one another along the longitudinal direction X.

The method for manufacturing further comprises a step of final curing the compressed component.

The step of final curing is carried out by a curing station 259 of the compressed component.

As shown on figure 6, the method for manufacturing further comprises a step of cutting the obtained cured compressed component so as to separate the flexible light-adjusting devices 14 from each other.

Advantageously, the cutting is carried out between two adjacent sealing layers defining a reception area.

The lines of cut are schematically identified by the numeral references C1 and C2.

A second embodiment not illustrated of a glazing unit according to the invention is described in the following.

The glazing unit according to the second embodiment is disclosed only by difference as compared to the glazing unit 10 of the first embodiment described in reference to figures 1 to 3.

The glazing unit of the second embodiment differs from the first embodiment of glazing unit 10 of by the light-adjusting device.

The light adjusting device of the glazing unit of the second embodiment does not comprise the first and second alignment layers 23, 33.

A third embodiment not illustrated of glazing unit according to the invention is described in the following.

The glazing unit according to the third embodiment is disclosed only by difference as compared to the glazing unit 10 of the first embodiment described in reference to figures 1 to 3.

The glazing unit according to the third embodiment differs from the glazing unit of the first embodiment in that the glazing 12 is a laminated glazing comprising comprises at least two transparent panes and an interlayer extending between the at least two panes.

The interlayer can be formed by at least one thermoplastic interlayer film. The thermoplastic interlayer film comprises at least one thermoplastic polymer, preferably ethylene vinyl acetate (EVA), polyvinyl butyral (PVB) or polyurethane (PU) or mixtures or copolymers or derivatives thereof.

Alternatively, the interlayer can be made in SentryGlas^{®}.

The interlayer also known as "lamination interlayer" is made of polymeric material, preferably thermoplastic.

The transparent pane may be clear, extra clear or tinted.

The interlayer is for example in PVB.

As a variant, the interlayer is in ethylene-vinyl acetate (known under the acronym "EVA").

For example, the thickness of the interlayer is greater than or equal to 0.2 mm and inferior or equal to 2 mm, for example greater than or equal to 0.3 mm and inferior or equal to 1.6 mm, particularly preferably greater than or equal to 0.3 mm and inferior or equal to 1 mm, for example 0.38 mm or 0.76 mm.

The first pane has first and second main faces.

The second pane has third and fourth main faces.

The second and third main faces face each other.

The interlayer extends between the second and third main faces.

In the glazing unit according to the second embodiment, the flexible light-adjusting device 14 is linked to the glazing.

The light-adjusting device 14 may be arranged between the second and third main faces, preferably inside the interlayer, linked to the first main face or to the fourth main face.

A fourth embodiment of a glazing unit 310 is described in the following in reference to figure 7.

The glazing unit 310 according to the fourth embodiment is disclosed only by difference as compared to the glazing unit 10 of the first embodiment described in reference to figures 1 to 3.

The glazing unit comprises a double glazing 370.

The double glazing comprises a first glazing 312, and a second glazing 312₂ separated by a layer 372 being gas or vacuum. The layer 372 is sealed by a peripheral seal extending between the first 312₁ and a second glazing 312₂.

Each glazing 312₁, 312₂ is a monolithic glazing or a laminated glazing as described in relation to the third embodiment of glazing unit.

The first glazing 312, has first and second main faces.

The second glazing 312₂ has third and fourth main faces.

The second and third main face each other.

The flexible light-adjusting device 14 is linked to the double glazing.

The flexible light-adjusting device 14 is linked to a face of the double glazing 370.

For example, the flexible light-adjusting device 14 is linked to the fourth main face by the intermediate layer 316.

According to other embodiments, the light-adjusting device 14 may be arranged between the second and third faces, on the first main face, on the second main face, on the third main face or embedded inside one glazing, preferably inside the interlayer of the glazing when the glazing is laminated.

According to a variant of the fourth embodiment, the glazing is a triple glazing and the flexible light-adjusting device 14 is linked to the triple glazing.

## Claims

1. A method for manufacturing an electrically controllable flexible light-adjusting device (14) able to present at least a tunable optical property using liquid crystals, the method for manufacturing being preferably carried out under atmospheric pressure, the method for manufacturing comprising the following steps:
- providing a first stack of layers (20; 120) being transparent and flexible, the provided first stack of layers (20; 120) having an internal surface (20A; 120A) and an external surface (20B; 120B), the first stack of layers (20; 120) comprising from its external surface (20B; 120B) to its internal surface (20A; 120A), a first base layer (21; 121) and a first electrically conductive layer (22, 122), the first electrically conductive layer (22; 122) being a continuous layer, an area of the first electrically conductive layer (22; 122) of the provided first stack of layers (20; 120) being greater than or equal to 1 cm², preferably greater than or equal to 25 cm² and advantageously greater than or equal to 100 cm², at least a portion of the first electrically conductive layer (22; 122) being intended to form a first electrode of the flexible light-adjusting device (14),
- applying a sealing material (47) to the internal surface (20A; 120A) of the provided first stack of layers (20; 120) for defining at least a contour of sealing material, the contour of sealing material delimiting on the internal surface (20A; 120A) of the first stack of layers (20; 120) at least a portion of a reception area (52; 152) of an electroactive material (46),
- providing a second stack of layers (30; 130) being transparent and flexible, the provided second stack of layers (30; 130) having an internal surface (30A; 130A) and an external surface (30B; 130B), the second stack of layers (30; 130) comprising from its external surface (30B; 130B) to its internal surface (30A; 130A), a second base layer (31; 131) and a second conductive layer (32; 132), the second conductive layer (32; 132) being a continuous layer, an area of the second electrically conductive layer (32; 132) of the provided second stack of layers (30; 130) being greater than or equal to 1 cm², preferably greater than or equal to 25 cm² and advantageously greater than or equal to 100 cm², at least a portion of the second electrically conductive layer (32; 132) being intended to form a second electrode of the flexible light-adjusting device (14),
- adhering a plurality of spacer particles (48) to the internal surface (30A; 130A) of the provided second stack of layers (30; 130),
- introducing the spacer particles (48) adhering to the internal surface (30A; 130A) of the second stack of layers (30; 130) in an electroactive material (46) filling at least a zone of the reception area (52; 152), the electroactive material (46) comprising at least a plurality of liquid crystals (50) and, optionally, dyes,
- pressing against each other the first stack of layers (20; 120) provided with the electroactive material (46) filling at least a zone of the reception area (52; 152) and the second stack of layers (30; 130) provided with the spacer particles (48) to bond them to each other to obtain a compressed component, the internal surfaces (20A, 30A; 120A, 130A) of the first and second stacks of layers (20,30; 120, 130) facing each other during the step of pressing, the step of pressing being carried out by two rollers (56, 58; 156, 158; 256, 258) having opposite winding directions though which the first and second stacks of layers (20, 30; 120, 130) are conveyed,
the step of introducing and the step of pressing being carried out at the same time or the step of introducing being carried out before the step of pressing.

2. The method for manufacturing according to claim 1, further comprising a step of injecting the electroactive material (46) inside said zone of the reception area (52; 152) of the first stack of layers (20; 120), the step of injecting being carried out under atmospheric pressure.

3. The method for manufacturing according to claim 1 or 2, wherein the first and second stacks of layers (20, 30; 120; 130) are conveyed substantially horizontally between the two rollers (56, 58; 156, 158; 256, 258) during the step of pressing.

4. The method for manufacturing according to claim 3 taken in combination with claim 2, wherein the electroactive material (46) is injected towards a zone of the reception area (52; 152).

5. The method for manufacturing according to claim 1 or 2, wherein the first and second stacks of layers (20, 30; 120; 130) are conveyed substantially vertically between the two rollers (56, 58; 156, 158; 256, 258) during the step of pressing.

6. The method for manufacturing according to claim 5 taken in combination with claim 2, wherein the electroactive material (46) is injected vertically in an interstice defined between at least a zone of the reception area (152) of the first stack of layers (120) and a zone of the second stack of layers (130) facing each other.

7. The method for manufacturing according to any one of the preceding claims, wherein a width of each of the first electrically conductive layer (22; 122) and the second electrically conductive layer (32; 132) is greater than or equal to 1 centimeter, preferably greater than or equal to 5 centimeters and advantageously greater than or equal to 10 centimeters, and/or a length of each of the first electrically conductive layer (22; 122) and the second electrically conductive layer (32; 132) is greater than or equal to 1 centimeter, preferably greater than or equal to 5 centimeters and advantageously greater than or equal to 10 centimeters.

8. The method for manufacturing according to any one of the preceding claims, wherein the first stack of layers (20; 120) comprises a first alignment layer (23; 123) and the second stack of layers (30; 130) comprises a second alignment layer (33; 133), the first electrically conductive layer (22; 122) extending in sandwich between the first base layer (21; 121) and the first alignment layer (23; 123) and the second electrically conductive layer (32; 132) extending in sandwich between the second base layer (31; 131) and the second alignment layer (33; 133).

9. The method for manufacturing according to any one of the preceding claims, wherein the electroactive material (47) does not comprise polymer or a rate of polymer lower than 15 % in weight.

10. The method for manufacturing according to any one of the preceding claims, wherein the electroactive material (47) in which the spacer particles (48) are introduced comprises a viscosity greater than or equal to 0.01 Pa.s (Pascal-second), and preferably greater than or equal to 0.01 Pa.s and less than or equal to 2 Pa.s.

11. The method for manufacturing according to any one of the preceding claims, wherein the two rollers (56, 58; 156, 158; 256, 258) are heated during the step of pressing.

12. The method for manufacturing according to any one of the preceding claims, wherein, during the step of pressing, the rollers (56, 58; 156, 158; 256, 258) apply a pressure on the external surfaces (20B, 30B; 120B, 130B) of the first and second stack of layers (20, 30; 120, 130), the applied pressure being preferably greater or equal to 0.3 Mega Pascal (MPa) and lower or equal to 5,5 MPa.

13. The method for manufacturing according to any one of the preceding claims, wherein a speed of the first and second stacks of layers (20, 30; 120, 130) passing through the two rollers (56, 58; 156, 158; 256, 258) during the step of pressing is less than 10 meters per minute (m.min⁻¹).

14. The method for manufacturing according to any one of the preceding claims, wherein a plurality of flexible light-adjusting devices (14) are obtained from the compressed component, the method further comprising the step of cutting the obtained compressed component to separate each flexible light-adjusting device (14) from each other.

15. A flexible light-adjusting device (14) electrically controllable able to present at least a tunable optical property using liquid crystals, the flexible light adjusting device (14) being obtained by carrying out the method for manufacturing according to any one of the preceding claims and comprising:
- a first stack of layers (20) being transparent and flexible, the first stack of layers (20; 120) having an internal surface (20A) and an external surface (20B), the first stack of layers (20) comprising from its external surface (20B) to its internal surface (20A), a first base layer (21) and a first electrically conductive layer (22) forming a first electrode of the flexible light-adjusting device (14), the first electrically conductive (22) layer being a continuous layer, an area of the first electrically conductive layer (22) being greater than or equal to 1 cm², preferably greater than or equal to 25 cm² and advantageously greater than or equal to 100 cm²,
- a second stack of layers (30) being transparent and flexible, the second stack of layers (30) having an internal surface (30A) and an external surface (30B), the second stack of layers (30) comprising from its external face (30B) to its internal face (30A), a second base layer (31) and a second conductive layer (32) forming a second electrode of the flexible light-adjusting device (14), the second conductive layer (32) being a continuous layer, an area of the second electrically conductive layer (32) being greater than or equal to 1 cm², preferably greater than or equal to 25 cm² and advantageously greater than or equal to 100 cm²,
the internal layers (20A, 30A) of the first and second stacks of layers (20, 30) facing each other,
- a sealing layer (40) made of a sealing material (47) delimiting with at least a portion of the internal surface (20A) of the first stack of layers (20) and with at least a portion of the internal surface (30A) of the second stack of layers (30) a sealed intermediate space (44),
- an electroactive layer (42) comprising an electroactive material (46) defining an active area of the flexible light-adjusting device (14), the electroactive material (46) comprising at least a plurality of liquid crystals (50) and, optionally, dyes, the electroactive layer (42) extending inside the sealed intermediate space (44), the electroactive layer (42) comprising a plurality of spacer particles (48) included inside the electroactive material (46), the plurality of spacer particles (48) separating the first stack of layers (20) and the second stack of layers (30) from each other,
the electroactive layer (42) being configured to switch between a first optical state in which the liquid crystals (50) present a first arrangement in the electroactive layer (42) and a second optical state in which the liquid crystals (50) present a second arrangement in the electroactive layer (42), in function of a predetermined voltage applied to the electroactive layer (42) via the first electrode and the second electrode, the switching between the first optical state and the second optical state causing a change in the setting of the optical property.

16. The flexible light-adjusting device according to claim 15, wherein said tunable optical property is transmission haze, transmittance or reflectance of the electroactive layer.

17. A glazing unit (10; 310) including the flexible light-adjusting device (14) according to claim 15 or 16 and at least one glazing chosen in the following list of glazing: monolithic glazing, laminated glazing, double or triple glazing, curved or plane glazing, the flexible light-adjusting device (14) being attached to said glazing.

18. A wall for a building (10; 310) including the glazing unit according to claim 17, said wall forming at least in part an exterior wall, a window, a door, an interior partition or a furniture.
